# EUROPÄISCHE PATENTSCHRIFT

(11) **EP 2 610 032 B1**
(45) Veröffentlichungstag und Bekanntmachung des Hinweises auf die Patenterteilung: **01.04.2015**
(21) Anmeldenummer: 11196135.5
(22) Anmeldetag: 30.12.2011
(51) Int. Cl.: B25B 21/00, B25B 23/04, B25B 23/06, B23P 19/00

(54) **Vereinzelungsvorrichtung**
Separation device
Dispositif de séparation

(43) Veröffentlichungstag der Anmeldung: 03.07.2013
(73) Patentinhaber: EJOT Baubefestigungen GmbH, 57334 Bad Laasphe (DE)
(72) Erfinder:
(74) Vertreter: Hohgardt, Martin

(56) Entgegenhaltungen:
- EP-A1- 0 600 283

## Beschreibung

Die vorliegende Erfindung betrifft ein Setzgerät mit einer Vereinzelungsvorrichtung , mittels welcher aufmagazinierte Befestigungsmittel, insbesondere Schrauben (mit und ohne Dichtscheibe), vom magazinierten Zustand in den vereinzelten Zustand überführt werden können, so dass die vereinzelten Schrauben einer Weiterverarbeitungseinheit zugeführt werden können sowie ein Verfahren zum Überführen von aufmagazinierten Befestigungsmitteln vom magazinierten Zustand in einen vereinzelten Zustand.

Das automatische Vereinzeln und Zuführen von aufmagazinierten Befestigungsmitteln ist seit langem ein Bestreben in der Industrie, insbesondere um Arbeitsabläufe schneller zu gestalten. Dabei ist der Grundgedanke stets mehrere Befestigungsmittel in einem Magazin in irgendeiner Art und Weise aufzureihen und mittels einer Vorrichtung einer Weiterverarbeitungseinheit, z.B. einem Schraubwerkzeug automatisch zuzuführen, so dass der Verwender des Werkzeuges nicht jedes Mal manuell ein Befestigungsmittel vereinzeln muss und dieses dem Werkzeug zuführen muss. Die manuelle Vereinzelung und Zuführung von Befestigungsmitteln ist nicht nur ein langsamer Arbeitsablauf sondern auch umständlich, insbesondere im professionellen Anwendungsfall, wenn eine große Anzahl von Befestigungsmittel verwendet wird.

Im Stand der Technik sind Lösungen zur Vereinzelung und zur automatischen Zuführung von Befestigungsmitteln bekannt. Allerdings verwenden die im Stand der Technik bekannten Lösungen mehrere Bauteile oder Bauteilgruppen, um die Vereinzelung und die automatische Zuführung zu gewährleisten. Dabei wird zumeist ein Bauteil dazu verwendet, ein aufmagaziniertes Befestigungsmittel zu vereinzeln und ein weiteres Bauteil hält die übrigen Befestigungsmittel im Magazin zurück. So zeigt zum Beispiel die US 5,337,636 eine automatische Schrauben Vereinzelungs- und Zuführvorrichtung, die zusammen mit einem gewöhnlichen elektrischen Schraubwerkzeug - z.B. einem Akkuschrauber oder einer Bohrmaschine - verwendet werden kann. Dabei besteht die Vorrichtung selbst aus einem Magazin zur Aufnahme der Schrauben, sowie einem Hebelmechanismus, der die Schrauben einzeln aus dem Magazin entnimmt und dem Schraubwerkzeug zuführt. Ist durch den Hebelmechanismus eine Schraube entnommen, so werden die übrigen Schrauben im Magazin durch ein zusätzliches Rückhaltemittel im Magazin gehalten.

Eine weitere Vereinzelungsvorrichtung entsprechend dem Oberbegriff des Anspruchs 1 ist zum Beispiel in EP 0 600 283 A1 beschrieben. EP 0 600 283 A1 zeigt eine Vereinzelungsvorrichtung, die mittels anschlagsbedingter Bewegung zweier auf einer schwenkbaren Platte angeordneter Keile, aufmagazinierte Befestigungselemente vereinzelt.

Es stellt sich die Aufgabe, eine Vereinzelungsvorrichtung für magazinierte Befestigungsmittel bereitzustellen, die eine technisch einfachere und zuverlässigere Lösung zur Vereinzelung und Zuführung von aufmagazinierten Befestigungsmitteln darstellt und insbesondere eine geringe Komplexität aufweist und flüssigere Arbeitsabfolgen erlaubt. Diese Aufgabe wird erfindungsgemäß durch das Setzgerät mit einer Vereinzelungseinrichtung und das Verfahren gemäß den unabhängigen Patentansprüchen gelöst.

Die erfindungsgemäße Vereinzelungsvorrichtung besteht aus einem Hebel und einem Führungsmittel. Das Führungsmittel dient der Zuführung von aufmagazinierten Befestigungsmitteln zu dem Hebel. Dabei ist das Führungsmittel vorzugsweise so ausgestaltet, dass sich die Befestigungsmittel entweder getrieben oder durch die Schwerkraft in oder an diesem entlang zu einem Auslass bewegen können. Der Hebel ist drehbar gelagert und vor dem Auslass des Führungsmittels angeordnet.

An einem Ende des Hebels befinden sich ein erster und ein zweiter Steg, die hintereinander und in einem gewissen Abstand seitlich voneinander versetzt angeordnet sind. Dabei ist vorzugsweise der erste Steg näher an dem Auslass des Führungsmittels angeordnet als der zweite Steg.

Der erste und der zweite Steg sind derart an dem Hebel angeordnet, dass in einer ersten Position des Hebels, die einer Befestigungsposition des Setzgerätes entsprechen kann, ein aufmagaziniertes Befestigungsmittel von dem Führungsmittel in einem vor dem Auslass des Führungsmittels angeordneten Aufnahmeraum aufgenommen werden kann. In dieser ersten Position des Hebels ist der erste Steg vorzugsweise nicht vor dem Auslass des Führungsmittels angeordnet. Der vor dem Auslass des Führungsmittels angeordnete Aufnahmeraum ist vorzugsweise groß genug, um einem der aufmagazinierten Befestigungsmittel Platz zu bieten. In einer bevorzugten Ausführungsform wird der Aufnahmeraum an zwei seiner äußeren Kanten durch die sich entlang dieser Kanten bewegenden Stege des Hebels begrenzt, so dass zumindest eine Dimension des Raumes, dem Abstand der beiden Stege entspricht.

In der ersten Position des Hebels verhindert der zweite Steg, dass das in dem Aufnahmeraum aufgenommene Befestigungsmittel den Aufnahmeraum wieder verlassen kann. Der zweite Steg ist vorzugsweise weiter weg von dem Auslass angeordnet.

Erfindungsgemäß weist die Vereinzelungsvorrichtung eine Kulissensteuerung auf, mit einer Kulisse, die angepasst ist, um mit dem Hebel der Vereinzelungsvorrichtung zusammen zu wirken und um diesen zu bewegen. Dabei ist der Hebel so ausgestaltet, dass er eine Anschlagsfläche oder eine Nut oder einen Schlitz aufweist, an der oder in der ein Kulissenstein der Kulisse geführt wird, um die Bewegung der Kulisse auf den Hebel zu übertragen. Dabei wird bei der Bewegung der Kulisse der Hebel vorzugsweise von der ersten zur zweiten Position bewegt beziehungsweise umgekehrt. Die Kulissensteuerung kann dabei auch bevorzugt so ausgestaltet sein, dass sich die Kulisse in Relation zu der Auf- und Abwärtsbewegung des Setzgerätes, insbesondere eines Schraubsetzgerätes bewegt, so dass die Hebelposition und damit das Vereinzeln der Befestigungsmittel mit der Auf- und Abwärtsbewegung und somit mit der Ent- und Belastung des Setzgerätes korreliert. Dabei ist die Anschlagsfläche des Hebels und die Kulisse mit dem Kulissenstein vorzugsweise so ausgestaltet, dass eine erste Belastung des Setzgerätes dazu führt, dass der Hebel in die erste Position bewegt wird und ein Befestigungsmittel von dem Führungsmittel in den definierten Aufnahmeraum aufgenommen werden kann. Wird das Setzgerät nun wieder entlastet, ist die Kulisse mit dem Kulissenstein und die Anschlagsfläche des Hebels vorzugsweise so ausgestaltet, dass sich der Hebel in die zweite Position bewegt, was dazu führt, dass sich der erste Steg zwischen den Aufnahmeraum und den Auslass des Führungsmittels bewegt und somit das sich im Aufnahmeraum befindliche Befestigungsmittel von den weiteren sich im Führungsmittel befindlichen Befestigungsmitteln getrennt, d.h. vereinzelt wird. Des Weiteren hält der erste Steg in der zweiten Position die weiteren sich im Führungsmittel befindlichen Befestigungsmittel zurück. Vorzugsweise ist der zweite Steg des Weiteren so ausgestaltet, dass wenn das Setzgerät vollständig entlastet ist und sich der Hebel also in der zweiten Position befindet, das durch den ersten Steg vereinzelte Befestigungsmittel aus dem Aufnahmeraum einer Weiterverarbeitungseinheit, z.B. einer Haltebackenanordnung, zugeführt werden kann. Dies führt dann bei einer zweiten Belastung des Setzgerätes und der Bewegung des Hebels wieder in die erste Position dazu, dass nicht nur ein weiteres Befestigungsmittel in den definierten Aufnahmeraum aufgenommen werden kann, sondern auch dazu, dass das bei der Entlastung der Weiterverarbeitungseinheit zugeführte Befestigungsmittel weiterverarbeitet werden kann, z.B. befestigt werden kann. Dieser Vorgang wiederholt sich dann stetig bei der Be- und Entlastung des Setzgerätes, so dass es bei einer Entlastung des Setzgerätes zu einer Vereinzelung kommt und vorzugsweise ein vereinzeltes Befestigungsmittel der Weiterverarbeitungseinheit zugeführt wird und dass es bei der Belastung des Setzgerätes zu der Verarbeitung des der Weiterverarbeitungseinheit zugeführten Befestigungsmittels kommt, sowie zu einer Aufnahme von einem der aufmagazinierten Befestigungsmittel in den definierten Aufnahmeraum. Dieses ermöglicht gerade bei vielen zu befestigenden Befestigungsmitteln, dass eine einfache Arbeitsabfolge gewährleistet werden kann und viele Befestigungsmittel in kurzer Zeit verarbeitet werden können. Es können aber auch andere Mechanismen vorgesehen sein, die den Hebel von der ersten Position hin zur zweiten Position und zurück bewegen.

Wird nun der Hebel von der ersten Position hin zu einer zweiten Position bewegt, so bewegt sich der erste Steg zwischen den Aufnahmeraum und den Auslass des Führungsmittels und führt dabei das sich im Aufnahmeraum befindliche aufmagazinierte Befestigungsmittel in den einzelnen Zustand über. Dabei hält der erste Steg zugleich die weiteren sich im Führungsmittel befindlichen aufmagazinierten Befestigungsmittel im Führungsmittel zurück.

Durch das erfindungsgemäße Setzgerät wird erstmals eine Vereinzelungsvorrichtung bereitgestellt, die eine technisch einfachere und zuverlässigere Lösung zur Vereinzelung und Zuführung von aufmagazinierten Befestigungsmitteln darstellt und insbesondere eine geringe Komplexität aufweist und flüssigere Arbeitsabfolgen erlaubt. Erfindungsgemäß wird hierfür lediglich ein Hebel mit zwei Stegen verwendet. Durch die Anordnung der Stege an dem Hebel, die während der Bewegung des Hebels vorzugsweise eine Parallelverschiebung erfahren, wird ein flüssiger Arbeitsablauf gewährleistet. Durch die im Vergleich zum Stand der Technik verminderte Anzahl an sich bewegender Bauteile wird gewährleistet, dass die Befestigungsmittel zügig einer Weiterverarbeitungseinheit zugeführt werden können, ohne dass es eventuell zu einer Verkantung der Befestigungsmittel kommt. Des Weiteren wird bei der erfindungsgemäßen Vorrichtung aufgrund des Einsatzes weniger Bauteile auch gewährleistet, dass die Wartungskosten gering sind, sowie der Wartungsaufwand, da nicht wie im Stand der Technik mehrere sondern nur ein Teil getauscht werden muss. Darüber hinaus ist der Hebel der erfindungsgemäßen Vereinzelungsvorrichtung nicht so filigran gestaltet, wie es im Stand der Technik für das Rückhaltemittel oft der Fall ist, so dass auch die Abnutzungserscheinungen geringer ausfallen, als es bei den aus dem Stand der Technik bekannten Rückhaltemitteln der Fall ist.

Die erfindungsgemäße Vereinzelungsvorrichtung stellt somit ein einfaches Mittel zur Überführung von aufmagazinierten Befestigungsmitteln vom magazinierten Zustand in den vereinzelten Zustand dar.

In einer bevorzugten Ausführungsform der erfindungsgemäßen Vereinzelungsvorrichtung ist der zweite Steg derart angeordnet, dass er in der ersten Position des Hebels verhindert, dass das in dem Aufnahmeraum aufgenommene Befestigungsmittel den Aufnahmeraum verlassen kann, aber in der zweiten Position des Hebels dem durch den ersten Steg vereinzelten Befestigungsmittel ermöglicht, den Aufnahmeraum zu verlassen und einer Weiterverarbeitungseinheit zuzuführen.

In einer bevorzugten Ausführungsform der erfindungsgemäßen Vereinzelungsvorrichtung bewegt sich der Hebel von der zweiten Position wieder in die erste Position und ermöglicht somit ein kontrolliertes Vereinzeln und Zuführen der aufmagazinierten Befestigungsmittel.

In einer bevorzugten Ausführungsform der erfindungsgemäßen Vereinzelungsvorrichtung ist der Abstand zwischen dem ersten und dem zweiten Steg zumindest so groß gewählt, dass er dem Kopfdurchmesser der aufmagazinierten Befestigungsmittel entspricht. Des Weiteren sollte der erste und zweite Steg vorzugsweise mindestens eine Höhe haben, die der Kopfhöhe der magazinierten Befestigungsmittel entspricht. Im Falle, dass an den Befestigungsmitteln auch Dichtscheiben angeordnet sind, sollte die Höhe der Stege vorzugsweise der maximalen Kopfhöhe der Befestigungsmittel plus den Abstand der Dichtscheibe zum Befestigungsmittelkopf entsprechen. Damit unterschiedliche Befestigungsmittel der Vereinzelungsvorrichtung zugeführt werden können, kann auch ein Hebel verwendet werden, an dem die Stege bezüglich der Höhe und ihrem Abstand variabel sind.

In einer weiteren bevorzugten Ausführungsform der erfindungsgemäßen Vereinzelungsvorrichtung kann das Ende des Hebels, welches den ersten und zweiten Steg aufweist, aus einem anderen Material bestehen, welches sich von dem Material des übrigen Hebels unterscheidet. Dabei kann das Material dieses Endes des Hebels beispielsweise im Vergleich zu dem Material des restlichen Teils des Hebels härter sein, um eventuellen Abnutzungserscheinungen vorzubeugen, wenn die Befestigungsmittel an dem Hebelende und an den Stegen vorbeirutschen. Auch kann das Material dieses Endes des Hebels im Vergleich zum übrigen Material einen niedrigeren Reibungskoeffizienten aufweisen, um das Entlangrutschen der Befestigungsmittel zu begünstigen.

In einer weiteren bevorzugten Ausführungsform der erfindungsgemäßen Vereinzelungsvorrichtung werden die Befestigungsmittel im magazinierten Zustand mittels eines in das Führungsmittel eingesetzten Magazinstreifens zu dem Hebel geführt, so dass die Befestigungsmittel kontinuierlich bis in den Aufnahmeraum geführt bleiben. An dem oberen Abschnitt der Führungsmittel können gegebenenfalls Mittel zum Lösen einer korrespondierenden Herausfallsperre des Magazinstreifens angeordnet sein. Der Magazinsteifen kann allerdings auf jede beliebige Weise mit dem Führungsmittel gekoppelt sein und so einen störungsfreien Übergang der Befestigungsmittel vom Magazinstreifen in das Führungsmittel gewährleisten.

In einer weiteren bevorzugten Ausführungsform der erfindungsgemäßen Vereinzelungsvorrichtung umfasst das Führungsmittel eine gebogene Zuführbahn. Diese geometrische Ausgestaltung, insbesondere des unteren Abschnittes des Führungsmittels hat sich als besonders günstig für den schwerkraftgeprägten Transport der Befestigungsmittel erwiesen. Dabei ist der Radius der Beugung der Zuführbahn zumeist direkt proportional zur Größe der Köpfe der Befestigungsmittel bzw. zur Größe der verwendeten Dichtscheiben, so dass einer Verkantung der Befestigungsmittel vorgebeugt werden kann, die auftreten kann, wenn der Radius der Beugung in Relation zur Größe zu klein gewählt wird. Des Weiteren kann je nach konkreter Ausgestaltung der Befestigungsmittel, die gebogene Zuführbahn von einem Steg geteilt werden. Der Steg ist in der Regel so ausgestaltet, dass er zwischen dem Kopf des Befestigungsmittels und einer Dichtscheibe bzw. zwischen der am Kopf der Befestigungsmittel angepressten Scheibe und der Dichtscheibe am Schaft des Befestigungsmittels anliegt und somit der Kopf des Befestigungsmittels getrennt wird von der Dichtscheibe, um einen einfacheren Transport in dem Führungsmittel zu gewährleisten. Insbesondere kann hierdurch einem Verkanten der Befestigungsmittel vorgebeugt werden.

In einer weiteren bevorzugten Ausführungsform der erfindungsgemäßen Vereinzelungsvorrichtung können beide oder nur ein Steg keilförmig ausgestaltet sein. Bevorzugt ist der erste Steg dabei so ausgestaltet, dass die Spitze des Keils sich einfach zwischen das im Aufnahmeraum befindliche Befestigungsmittel und die weiteren sich im Führungsmittel befindlichen Befestigungsmittel schieben kann, somit das Ende des Steges, welches näher am zweiten Steg liegt eine geringere Dicke aufweist, als das Ende des ersten Steges, welches weiter vom zweiten Steg beabstandet ist. Der zweite Steg kann vorzugsweise auch eine Keilform aufweisen, die das Halten des Befestigungsmittels im Aufnahmeraum begünstigt. Dabei kann beispielsweise die Dicke des zweiten Steges, am Ende welches weiter beabstandet ist vom Hebel, größer sein, als die Dicke des zweiten Steges an dem Ende, welches näher am Hebel liegt.

Die Aufgabe des einfachen Überführens von aufmagazinierten Befestigungsmitteln vom magazinierten Zustand in den vereinzelten Zustand, wird durch die Merkmale des Anspruchs 10 gelöst.

Anhand der beigefügten Zeichnungen wird die Überführung eines Befestigungsmittels vom aufmagazinierten Zustand in den vereinzelten Zustand mittels der erfindungsgemäßen Vereinzelungsvorrichtung und des erfindungsgemäßen Verfahrens veranschaulicht. Es zeigen:
- Fig. 1: eine perspektivische Darstellung eines Ausführungsbeispiels einer erfindungsgemäßen Vereinzelungsvorrichtung in einer ersten Position des Hebels;
- Fig. 2: eine perspektivische Darstellung eines Ausführungsbeispiels einer erfindungsgemäßen Vereinzelungsvorrichtung in einer zweiten Position des Hebels;
- Fig. 3: eine perspektivische Darstellung eines Ausführungsbeispiels des Hebels der erfindungsgemäßen Vereinzelungsvorrichtung.

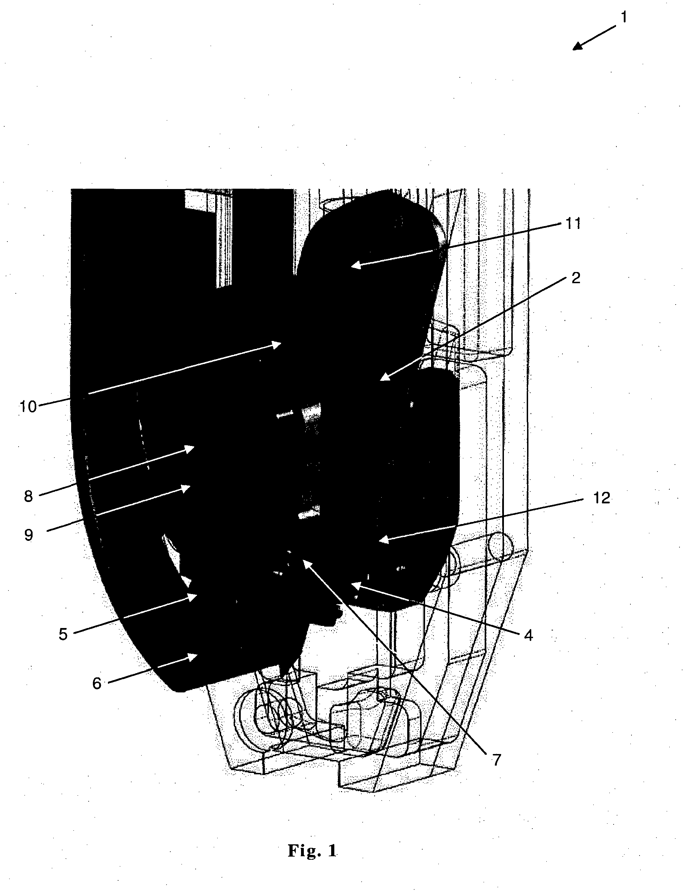

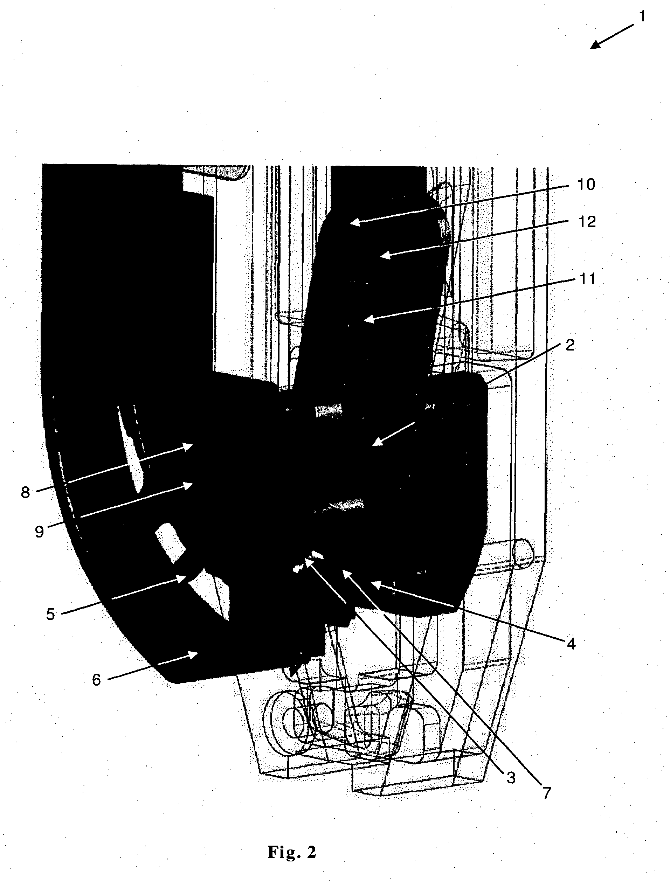

Figur 1 zeigt eine perspektivische Darstellung eines Ausführungsbeispiels der erfindungsgemäßen Vereinzelungsvorrichtung 1 mit einem Hebel 2 und einem Führungsmittel 6, bei der sich der Hebel 2 in der ersten Position befindet und Figur 2 zeigt dasselbe Ausführungsbeispiel bei der sich der Hebel 2 in der zweiten Position befindet. In dem hier gezeigten Ausführungsbeispiel sind der Hebel 2 und das Führungsmittel 6 in einem Setzgerät für Befestigungsmittel 5, hier einem Setzgerät für Schrauben mit Dichtscheiben, z.B. Spenglerschrauben, angeordnet. Die Vereinzelungsvorrichtung 1 dient zu Überführung der aufmagazinierten Befestigungsmittel 5 vom gezeigten magazinierten Zustand in den vereinzelten Zustand, um anschließend die vereinzelten Befestigungsmittel 5 einer Weiterverarbeitungseinheit, hier einer Haltebackenanordnung, des Setzgerätes zuzuführen.

In dem hier gezeigten Ausführungsbeispiel weist das Führungsmittel 6 für die Befestigungsmittel 5 eine gebogene Zuführbahn 8 auf, entlang derer die Befestigungsmittel 5 entweder getrieben oder mittels Schwerkraft rutschen können, hin zum Auslass des Führungsmittels 6. Dabei ist die Zuführbahn 8 gebogen und geht von einem im Wesentlichen vertikalen Zustand in einen im Wesentlichen horizontalen Zustand über. Diese Geometrie hat sich als besonders zweckmäßig für den kontinuierlichen Transport der Befestigungsmittel 5 erwiesen. Die hier gezeigten Befestigungsmittel 5 sind, wie oben beschrieben Spenglerschrauben, und weisen somit eine Dichtscheibe auf. In dem gezeigten Ausführungsbeispiel ist die Zuführbahn 8 durch einen Steg 9 getrennt, so dass sich in einem Teil der Zuführbahn 8 die Köpfe der Befestigungsmittel 5 bewegen können und in dem zweiten Teil die Dichtscheiben der Befestigungsmittel 5. Der Steg 9 in der Zuführbahn 8 verhindert dabei ein Verkanten der Befestigungsmittel 5. Die Befestigungsmittel 5 können beispielsweise über einen in das Führungsmittel 6 eingesetzten Magazinstreifens (hier nicht gezeigt) zugeführt werden.

Am Auslass des Führungsmittels 6 ist der Hebel 2 angeordnet. Der Hebel 2 wird mittels der in den Figuren 1 und 2 dargestellten Kulisse 10 gesteuert. Dabei weist der Hebel 2 eine Anschlagsfläche 11 auf, an der ein Kulissenstein 12 der Kulisse 10 geführt wird, um die Bewegung der Kulisse 10 auf den Hebel 2 zu übertragen. Ist der Kulissenstein 12 am unteren Ende der Anschlagsfläche 11 angekommen, wird in dem gezeigten Ausführungsbeispiel der Hebel 2 nach hinten gedrückt (Fig. 1) und befindet sich in der ersten Position. Bewegt sich der Kulissenstein 12 dann anschließend wieder entlang der Anschlagsfläche 11 nach oben, so wird der Hebel 2 nach vorne gedrückt (Fig. 2) und der Hebel 2 bewegt sich hin zur zweiten Position. Dabei kann die Kulisse 10 beispielsweise angepasst sein, um sich in Relation zu der Auf- und Abwärtsbewegung des Setzgerätes zu bewegen. Dadurch kann ein flüssiger Arbeitsablauf gewährleistet werden, was wiederrum dazu führt, dass die Anzahl der zu befestigenden Befestigungsmittel hoch ist, was gerade im industriellen Einsatz gewünscht ist.

In dem in den Figuren 1 und 2 gezeigten Ausführungsbeispiel weist der Hebel 2 an dem unteren Ende, einen ersten Steg 3 und einen zweiten Steg 4 auf. In dem hier gezeigten Ausführungsbeispiel ist der Hebel 2 derart angeordnet, dass der zweite Steg von dem Auslass des Führungsmittels 6 beabstandet ist und einen Aufnahmeraum 7 zwischen dem Auslass des Führungsmittels 6 und dem zweiten Steg 4 selbst begrenzt. In diesen Aufnahmeraum 7 kann in dem hier gezeigten Ausführungsbeispiel zumindest ein aufmagaziniertes Befestigungsmittel 5 rutschen. Dabei ist der Abstand des zweiten Steges 4 von dem Auslass des Führungsmittels 6 bevorzugt so gewählt, dass er mindestens dem Kopfdurchmesser des Befestigungsmittels plus der Dicke des ersten Steges 3 entspricht. Vorzugsweise ist die Stirnfläche des zweiten Steges 4 auch so abgeschrägt, dass sie zu einer Abschrägung des Kopfes des Befestigungsmittels passt, so dass ein sicherer Halt gewährleistet werden kann.

Bewegt sich nun die Kulisse 10 nach oben und drückt somit den Hebel 2 von der ersten Position (Fig. 1) hin zur zweiten Position (Fig. 2), so schiebt sich der erste Steg 3 zwischen den Auslass des Führungsmittels 6 und den durch den ersten und zweiten Steg 3, 4 definierten Aufnahmeraum 7, so dass das im Aufnahmeraum 7 befindliche Befestigungsmittel 5 von dem magazinierten Zustand in den einzelnen Zustand übergeführt wird. Dabei kann der erste Steg 3 vorzugsweise so ausgestaltet sein, dass eine Trennung der aufmagazinierten Befestigungsmittel 5 einfach bewerkstelligt werden kann. Dazu kann beispielsweise der erste Steg 3 eine keilartige Form haben, so dass er sich einfach zwischen die magazinierten Befestigungsmittel 5 und dem einen sich im Aufnahmeraum 7 befindlichen Befestigungsmittel 5 schieben kann. Dabei kann die Keilform derart ausgestaltet sein, dass die Spitze des Keils in Richtung der in Figur 2 gezeigten aufmagazinierten Befestigungsmittel weist, so dass sich der erste Steg 3 mit der Spitze des Keils voran zwischen die Befestigungsmittel 5 schieben kann. Des Weiteren kann am ersten Steg auch ein Trennmittel vorgesehen sein, welches dazu in der Lage ist, die aufmagazinierten Befestigungsmittel zu trennen, zum Beispiel in dem Fall, dass die Befestigungsmittel durch ein Magazinband zusammengehalten werden.

Ist der erste Steg 3 zwischen den Auslass des Führungsmittels 6 geschoben und hat das eine sich im Aufnahmeraum 7 befindliche magazinierte Befestigungsmittel 5 vereinzelt, so hält der erste Steg 3 gleichzeitig die weiteren sich im Führungsmittel 6 befindlichen magazinierten Befestigungsmittel 5 zurück, so dass das vereinzelte Befestigungsmittel 5 einer Weiterverarbeitungseinheit zugeführt werden kann. In dem in Figuren 1 und 2 gezeigten Ausführungsbeispiel ist die Weiterverarbeitungseinheit eine Haltebackenanordnung des Setzgerätes. Bei dem in den Figuren 1 und 2 gezeigten Hebel 2, ist hierfür der zweite Steg 4 so kurz, dass wenn sich der erste Steg 3 komplett vor den Auslass des Führungsmittels 6 geschoben hat, der Aufnahmeraum 7 freigegeben wird, so dass das durch den ersten Steg 3 vereinzelte Befestigungsmittel 5 in dem gezeigten Ausführungsbeispiel an dem zweiten Steg 4 vorbei entnommen werden kann und über einen nachgeschalteten Transportweg der Haltebackenanordnung zuggeführt werden kann.

Mit dem gezeigten erfindungsgemäßen Ausführungsbeispiel der Vereinzelungsvorrichtung 1 ist es somit möglich, in einer fließenden Arbeitsabfolge und in einem Arbeitsgang, ein aufmagaziniertes Befestigungsmittel 5 dem Führungsmittel 6 (Magazin) zu entnehmen, zu vereinzeln und einer Weiterverarbeitungseinheit zuzuführen.

Im Rahmen des gezeigten bevorzugten Ausführungsbeispiels bewegt sich die Kulisse 10 und der daran befindliche Kulissenstein 12 in Relation zu der Auf- und Abwärtsbewegung (Ent- und Belastung) des Setzgerätes. Dementsprechend wird bei einer Belastung des Setzgerätes der Kulissenstein 12 in dem hier gezeigten Ausführungsbeispiel nach unten entlang der Anschlagsfläche 11 des Hebels 2 bewegt und drückt den Hebel nach hinten in die erste Position (Figur 1). Ist der Kulissenstein 12 der Kulisse 11 am unteren Ende des Hebels 2 angekommen, so kann ein Befestigungsmittel 5 aus dem Auslass des Führungsmittels 6 in den definierten Aufnahmeraum 7 rutschen und gleichzeitig kann ein bereits an eine Haltebackenanordnung (hier nicht gezeigt) weitergegebenes Befestigungsmittel 5 befestigt werden. Wird nun in dem gezeigten bevorzugten Ausführungsbeispiel das Setzgerät entlastet, so bewegt sich der Kulissenstein 12 der Kulisse 10 wieder entlang der Anschlagsfläche 11 des Hebels 2 nach oben und der Hebel 2 wird in dem hier gezeigten Ausführungsbeispiel nach vorne bewegt, so dass der erste Steg 3 das sich im Aufnahmeraum 7 befindliche Befestigungsmittel 5 von den weiteren sich im Führungsmittel 6 befindlichen Befestigungsmitteln 5 trennt und vereinzelt. Ist der Kulissenstein 12 der Kulisse 10 dann am obersten Ende des Hebels 2 angekommen, so befindet sich der Hebel 2 in der zweiten Position (Figur 2) und das Befestigungsmittel 5, welches sich im Aufnahmeraum 7 befindet ist durch den ersten Steg 3 vom magazinierten Zustand in den vereinzelten Zustand übergeführt worden. Des Weiteren hält der erste Steg 3 die weiteren sich im Führungsmittel 6 befindlichen Befestigungsmittel 5 zurück, während der zweite Steg 4 dann derart angeordnet ist, dass das vereinzelte Befestigungsmittel 5 der Haltebackenanordnung zugeführt werden kann. Wird das Setzgerät nun wieder belastet, so bewegt sich der Kulissenstein 12 der Kulisse 10 entlang der Anschlagsfläche 11 des Hebels 2 nach unten, wodurch der Hebel 2 nach hinten gedrückt wird und der erste Steg 3 wieder die sich im Führungsmittel 6 befindlichen Befestigungsmittel 5 freigibt, so dass wenn der Kulissenstein 12 der Kulisse 10 am unteren Ende des Hebels 2 angekommen ist und sich der Hebel 2 wieder in der ersten Position (Figur 1) befindet, ein Befestigungsmittel 5 dem Aufnahmeraum 7 zugeführt wird, während das bereits der Haltebackenanordnung (hier nicht gezeigt) zugeführte Befestigungsmittel 5 befestigt wird und der oben beschriebene Prozess beginnt von neuem.

Die Vereinzelung der Befestigungsmittel 5 über die am Hebel 2 angebrachten Stege 3, 4, geht somit in dem gezeigten Ausführungsbeispiel einher mit der Be- und Entlastung des Setzgerätes und ermöglicht somit eine flüssige Arbeitsabfolge.

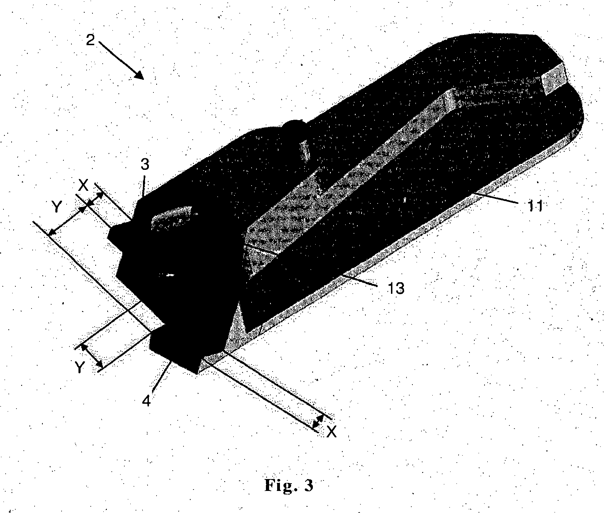

Figur 3 zeigt eine perspektivische Detailansicht des Hebels 2 mit dem an einem Ende 13 angeordneten ersten Steg 3 und dem zweiten Steg 4. In dem in Figur 3 gezeigten Ausführungsbeispiel sind der erste und zweite Steg 3, 4 hintereinander angeordnet und um einem Abstand Y versetzt zueinander angeordnet. Die Höhe X der Stege ist dabei bevorzugt so gewählt, dass sie der maximalen Kopfhöhe des Befestigungsmittels entspricht. Des Weiteren ist der erste Steg 3 bevorzugt keilförmig ausgestaltet, so dass er sich zwischen die aufmagazinierten Befestigungsmittel 5 drücken kann, um diese zu vereinzeln. In dem in Figur 3 gezeigten Ausführungsbeispiel weist der Hebel 2 auch eine Anschlagsfläche 11 auf, entlang dieser Anschlagsfläche 11 kann sich der Kulissenstein 12 der Kulisse 10 (Figuren 1 und 2) bewegen, um den Hebel 2 über den Drehpunkt in die erste Position (Fig. 1) oder in die zweite Position (Fig. 2) zu drücken. Dabei wird, wie oben beschrieben, durch die Bewegung des Hebels 2 von der ersten Position hin zur zweiten Position mit Hilfe des ersten Steges 3 ein aufmagaziniertes Befestigungsmittel 5, welches sich in den Aufnahmeraum 7 befindet, vereinzelt. Hierbei ist die Kulisse 10 mit dem Kulissenstein 12 und der Anschlagsfläche 11 am Hebel 2 derart ausgestaltet, dass sie die auftretenden Kräfte, insbesondere die Kräfte, die auftreten bei einer Verkantung eines Befestigungsmittels 5, aushalten und die Kulissensteuerung ist bevorzugt derart ausgestaltet, dass sie ein gewisses Spiel hat, um Verkantungen vorzubeugen.

In dem in Figur 3 gezeigten Ausführungsbeispiel des Hebels 2, besteht der Hebel 2 aus zwei unterschiedlichen Materialien, wobei das Ende 13 des Hebels 2 an dem die zwei Stege 3, 4 angeordnet sind, aus einem Material bestehen kann, welches härter ist als das übrige Material des Hebels, so dass etwaige Abnutzungserscheinungen, welche durch das Entlangrutschen der Befestigungsmittel 5 auftreten, vermindert werden können. Auch kann das Material am Ende 13 des Hebels 2 einen geringeren Reibungskoeffizienten aufweisen, als das übrige Material, so dass ein einfacheres Entlangrutschen der Befestigungsmittel 5 gewährleistet werden kann, was gleichzeitig verhindert, dass es zu Verkantungen der Befestigungsmittel kommt.

In dem in Figur 3 gezeigten Ausführungsbeispiel ist das Ende 13 an dem die zwei Stege 3, 4 angeordnet sind auch geneigt. Diese Neigung ist der Neigung der gebogenen Zuführbahn 8 des Führungsmittels 6 gewidmet, so dass das Ende 13 des Hebels 2 und das Führungsmittel 6 zumindest am Übergabepunkt der Befestigungsmittel 5 im Wesentlichen senkrecht zueinander stehen, so dass ein einfaches Entlangrutschen der Befestigungsmittel 5 gewährleistet werden kann.

## Patentansprüche

1. Ein Setzgerät mit einer Vereinzelungsvorrichtung (1) zum Überführen von aufmagazinierten Befestigungsmitteln (5) vom magazinierten Zustand in einen vereinzelten Zustand, die Vereinzelungsvorrichtung (1) weist einen Hebel (2) und ein Führungsmittel (6) mit Auslass für die aufmagazinierten Befestigungsmittel (5) auf, wobei der Hebel (2) drehbar gelagert ist und vor dem Auslass des Führungsmittels (6) angeordnet ist, und
der Hebel (2) an einem Ende (13) einen ersten Steg (3) und einen zweiten Steg (4) aufweist, wobei der erste und der zweite Steg (3, 4) an dem einen Ende (13) des Hebels (2) hintereinander und in einem Abstand (Y) seitlich voneinander versetzt angeordnet sind und der erste und zweite Steg (3, 4) derart an dem Hebel (2) angeordnet sind, dass in einer ersten Position des Hebels (2) ein aufmagaziniertes Befestigungsmittel (5) von dem Führungsmittel (6) in einem vor dem Auslass des Führungsmittels (6) angeordneten Aufnahmeraum (7) aufgenommen werden kann und durch den zweiten Steg (4) am Verlassen des Aufnahmeraumes (7) gehindert wird; und
dass durch die Bewegung des Hebels (2) von der ersten Position hin zu einer zweiten Position, sich der erste Steg (3) zwischen den Aufnahmeraum (7) und den Auslass des Führungsmittels (6) bewegt und somit das sich im Aufnahmeraum (7) befindliche aufmagazinierte Befestigungsmittel (5) vom magazinierten Zustand in den vereinzelten Zustand überführt und die weiteren sich im Führungsmittel (6) befindlichen aufmagazinierten Befestigungsmittel (5) zurückhält
***dadurch gekennzeichnet, dass***
der Hebel (2) eine Anschlagsfläche (11) aufweist, entlang derer ein Kulissenstein (12) einer Kulisse (10) zwangsgeführt wird, um die Bewegung der Kulisse (10) auf den Hebel (2) zu übertragen, wobei der Hebel (2) von der ersten Position zu der zweiten Position bewegt wird und umgekehrt.

2. Die Vereinzelungsvorrichtung (1) nach Anspruch 1, wobei der Abstand (Y) zwischen dem ersten und dem zweiten Steg (3, 4) zumindest so groß ist, wie der Kopfdurchmesser der aufmagazinierten Befestigungsmittel (5).

3. Die Vereinzelungsvorrichtung (1) nach einem der vorhergehenden Ansprüche, wobei der erste und zweite Steg (3, 4) zumindest eine Höhe (X) haben, die der Kopfhöhe der aufmagazinierten Befestigungsmittel (5) entspricht.

4. Die Vereinzelungsvorrichtung (1) nach einem der vorhergehenden Ansprüche, wobei das Ende (13) des Hebels (2), welches den ersten und zweiten Steg (3, 4) aufweist, aus einem anderen Material besteht als der übrige Teil des Hebels (2).

5. Die Vereinzelungsvorrichtung (1) nach Anspruch 4, wobei das Material des einen Endes (13) des Hebels (2) einen niedrigen Reibungskoeffizienten aufweist als das Material des übrigen Teils Hebels (2).

6. Die Vereinzelungsvorrichtung (1) nach einem der vorhergehenden Ansprüche, wobei die Befestigungsmittel (5) im magazinierten Zustand mittels eines in das Führungsmittel (6) eingesetzten Magazinstreifens zum Hebel (2) geführt werden.

7. Die Vereinzelungsvorrichtung (1) nach einem der vorhergehenden Ansprüche, wobei das Führungsmittel (6) eine gebogene Zuführbahn (8) aufweist.

8. Die Vereinzelungsvorrichtung (1) nach Anspruch 7, wobei die gebogene Zuführbahn (8) von einem Steg (9) geteilt wird.

9. Die Vereinzelungsvorrichtung (1) nach einem der vorhergehenden Ansprüche, wobei die Kulisse (10) angepasst ist, sich in Relation zu der Auf- und Abwärtsbewegung eines Setzgerätes zu bewegen.

10. Verfahren zum Überführen von aufmagazinierten Befestigungsmitteln (5) vom magazinierten Zustand in einen vereinzelten Zustand mit Hilfe eines drehbar gelagerten Hebels (2), wobei der Hebel (2) eine Anschlagsfläche (11) aufweist, entlang derer ein Kulissenstein (12) einer Kulisse (10) zwangsgeführt wird, um die Bewegung der Kulisse (10) auf den Hebel (2) zu übertragen und den Hebel (2) von einer ersten Position hin zu einer zweiten Position zu bewegen und wobei der Hebel (2) an einem Ende (13) einen ersten Steg (3) und einen zweiten Steg (4) aufweist, wobei der erste und der zweite Steg (3, 4) an dem einen Ende (13) des Hebels (2) hintereinander und in einem Abstand (Y) seitlich voneinander versetzt angeordnet sind,
***dadurch gekennzeichnet, dass***
das Verfahren die folgenden Schritte aufweist:
Zuführen von aufmagazinierten Befestigungsmitteln (5) von einem die Befestigungsmittel (5) führenden Führungsmittel (6) in einen angrenzenden Aufnahmeraum (7), wenn sich der Hebel (2) in der ersten Position befindet, wobei sich der Aufnahmeraum (7) vor dem Auslass des Führungsmittels (6) befindet und wobei der zweite Steg (4) die aufmagazinierten Befestigungsmittel (5) am Verlassen des Aufnahmeraumes (7) hindert;
Überführen des sich im Aufnahmeraum (7) befindlichen aufmagazinierten Befestigungsmittels (5) vom magazinierten Zustand in den vereinzelten Zustand mit Hilfe des ersten Steges (3), wenn sich der Hebel (2) von der ersten Position hin zu der zweiten Position bewegt, wobei sich der erste Steg (3) zwischen den Auslass des Führungsmittels (6) und den Aufnahmeraum (7) bewegt und die weiteren sich im Führungsmittel (6) befindlichen aufmagazinierten Befestigungsmittel (5) zurückhält.

## Claims

1. A setting tool with a separation apparatus (1) for transferring lined up fasteners (5) from the lined up state to the separated state, the separation apparatus (1) comprises a lever (2) and a guiding means (6) with an outlet for the lined up fasteners (5), wherein the lever (2) is pivotally mounted and arranged in front of the outlet of the guiding means (6), and
the lever (2) comprises at one end (13) a first protrusion (3) and a second protrusion (4), wherein the first and the second protrusions (3, 4) at said one end (13) of the lever (2) are arranged behind one another and laterally spaced apart by a distance (Y) and the first and second protrusions (3, 4) are arranged at the lever (2) as such that in a first position of the lever (2) a lined up fastener (5) can be received by a receiving space (7) in front of the guiding means (6) and can be prevented from leaving the receiving space (7) by the second protrusion (4); and
that by the movement of the lever (2) from the first position to a second position, the first protrusion (3) is moved between the receiving space (7) and the outlet of the guiding means (6) and thereby the lined up fastener (5) located within the receiving space (7) is transferred from the lined up state to the separated state and the remaining fasteners (5) lined up in the guiding means (6) are retained
***characterized by that***
the lever (2) has a stop surface (11) along which a sliding block (12) of a sliding motion link (10) is guided along, in order to transfer the motion of the sliding motion link (10) onto the lever (2), wherein the lever (2) is moved from the first position to the second position and vice versa.

2. The separation apparatus (1) according to claim 1, wherein the distance (Y) between the first and the second protrusions (3, 4) is at least as big as the diameter of the head of the lined up fasteners (5).

3. The separation apparatus (1) according to any of the preceding claims, wherein the first and the second protrusions (3, 4) have at least a height (X), which corresponds to the height of the head of the lined up fasteners (5).

4. The separation apparatus (1) according to any of the preceding claims, wherein the end (13) of the lever (2), which comprises the first and the second protrusions (3, 4) is made from a different material as the remaining part of the lever (2).

5. The separation apparatus (1) according to claim 4, wherein the material of the one end (13) of the lever (2) has a lower friction coefficient than the material of the remaining part of the lever (2).

6. The separation apparatus (1) according to any of the preceding claims, wherein the fasteners (5) in the lined up state are guided to the lever (2) by ease of a magazine stripe inserted into the guiding means (6).

7. The separation apparatus (1) according to any of the preceding claims, wherein the guiding means (6) comprises a curved feeding path (8).

8. The separation apparatus (1) according to claim 7, wherein the feeding path (8) is separated by a protrusion (9).

9. The separation apparatus (1) according to any of the preceding claims, wherein the motion link (10) is adapted to move in alignment with the up and down motion of a setting tool.

10. A method for transferring lined up fasteners (5) from a lined up state into a separated state by ease of a pivotally mounted lever (2), wherein the lever (2) comprises a stop surface (11), along which a sliding block (12) of a sliding motion link (10) is guided, in order to transfer the motion of the motion link (10) onto the lever (2) and to move the lever (2) from a first position to a second position and wherein the lever (2) at one end (13) comprises a first protrusion (3) and a second protrusion (4), wherein the first and second protrusions (3, 4) at the one end (13) of the lever (2) are arranged behind one another and are laterally spaced apart by a distance (Y)
***characterized in that***
the method comprises the following steps:
feeding lined up fasteners (5) from a guiding means (6) guiding the lined up fasteners (5) into a receiving space (7), when the lever (2) is in the first position, wherein the receiving space (7) is located in front of the outlet of the guiding means (6) and wherein the second protrusion (4) prevents the lined up fasteners (5) to leave the receiving space (7);
transferring of the lined up fastener (5) from the lined up state into the separated state by ease of the first protrusion (3), when the lever (2) is moved from the first position to the second position, wherein the first protrusion (3) is moved between the outlet of the guiding means (6) and the receiving space (7) and retains the remaining lined up fasteners (5) in the guiding means (6).

## Revendications

1. Appareil de scellement avec un dispositif d'individualisation (1) pour faire passer des moyens de fixation emmagasinés (5) de l'état emmagasiné à un état individualisé, lequel dispositif d'individualisation (1) présente un levier (2) et un moyen de guidage (6) avec une sortie pour les moyens de fixation emmagasinés (5), le levier (2) étant monté tournant et disposé devant la sortie du moyen de guidage (6), et le levier (2) présentant à une extrémité (13) une première nervure (3) et une deuxième nervure (4), la première et la deuxième nervure (3, 4) étant disposées l'une derrière l'autre et décalées latéralement d'une distance (Y) l'une par rapport à l'autre à l'extrémité (13) du levier (2), et la première et la deuxième nervure (3, 4) étant disposées sur le levier (2) de façon que, dans une première position du levier (2), un moyen de fixation emmagasiné (5) puisse être reçu par le moyen de guidage (6) dans un espace de réception (7) disposé devant la sortie du moyen de guidage (6) et soit empêché de quitter l'espace de réception (7) par la deuxième nervure (4) et de façon que, par le mouvement du levier (2) de la première position vers une deuxième position, la première nervure (3) se déplace entre l'espace de réception (7) et la sortie du moyen de guidage (6), faisant ainsi passer le moyen de fixation emmagasiné (5) situé dans l'espace de réception (7) de l'état emmagasiné à l'état individualisé et retenant les autres moyens de fixation emmagasinés (5) situés dans le moyen de guidage (6), **caractérisé en ce que** le levier (2) présente une surface de butée (11) le long de laquelle un coulisseau (12) d'une coulisse (10) est guidé de manière forcée pour transmettre le mouvement de la coulisse (10) au levier (2), le levier (2) étant déplacé de la première position vers la deuxième position et inversement.

2. Dispositif d'individualisation (1) selon la revendication 1, dans lequel la distance (Y) entre la première et la deuxième nervure (3, 4) est au moins égale au diamètre de tête des moyens de fixation emmagasinés (5).

3. Dispositif d'individualisation (1) selon l'une des revendications précédentes, dans lequel la première et la deuxième nervure (3, 4) ont au moins une hauteur (X) qui correspond à la hauteur de tête des moyens de fixation emmagasinés (5).

4. Dispositif d'individualisation (1) selon l'une des revendications précédentes, dans lequel l'extrémité (13) du levier (2) qui présente la première et la deuxième nervure (3, 4) est composée d'un matériau différent de celui de la partie restante du levier (2).

5. Dispositif d'individualisation (1) selon la revendication 4, dans lequel le matériau de l'extrémité (13) du levier (2) présente un coefficient de frottement plus faible que le matériau de la partie restante du levier (2).

6. Dispositif d'individualisation (1) selon l'une des revendications précédentes, dans lequel les moyens de fixation (5) dans l'état emmagasiné sont guidés vers le levier (2) au moyen d'une bande de magasin insérée dans le moyen de guidage (6).

7. Dispositif d'individualisation (1) selon l'une des revendications précédentes, dans lequel le moyen de guidage (6) présente un parcours d'amenée courbe (8).

8. Dispositif d'individualisation (1) selon la revendication 7, dans lequel le parcours d'amenée courbe (8) est divisé par une nervure (9).

9. Dispositif d'individualisation (1) selon l'une des revendications précédentes, dans lequel la coulisse (10) est adaptée pour se déplacer en relation avec le mouvement ascendant et descendant d'un appareil de scellement.

10. Procédé pour faire passer des moyens de fixation emmagasinés (5) de l'état emmagasiné à un état individualisé à l'aide d'un levier (2) monté tournant, le levier (2) présentant une surface de butée (11) le long de laquelle un coulisseau (12) d'une coulisse (10) est guidé de manière forcée pour transmettre le mouvement de la coulisse (10) au levier (2) et pour déplacer le levier (2) d'une première position vers une deuxième position, et le levier (2) présentant à une extrémité (13) une première nervure (3) et une deuxième nervure (4), la première et la deuxième nervure (3, 4) étant disposées l'une derrière l'autre et décalées latéralement d'une distance (Y) l'une par rapport à l'autre à l'extrémité (13) du levier (2), **caractérisé en ce que** le procédé comporte les étapes suivantes : amenée de moyens de fixation emmagasinés (5) par un moyen de guidage (6) guidant les moyens de fixation (5) dans un espace de réception (7) adjacent lorsque le levier (2) se trouve dans une première position, l'espace de réception (7) se trouvant devant la sortie du moyen de guidage (6) et la deuxième nervure (4) empêchant les moyens de fixation emmagasinés (5) de quitter l'espace de réception (7) ; passage du moyen de fixation emmagasiné (5) situé dans l'espace de réception (7) de l'état emmagasiné à l'état individualisé à l'aide de la première nervure (3) lorsque le levier (2) se déplace de la première position vers la deuxième position, la première nervure (3) se déplaçant entre la sortie du moyen de guidage (6) et l'espace de réception (7) et retenant les autres moyens de fixation emmagasinés (5) se trouvant dans le moyen de guidage (6).
